# EUROPÄISCHE PATENTSCHRIFT

(11) **EP 0 688 779 B1**
(45) Veröffentlichungstag und Bekanntmachung des Hinweises auf die Patenterteilung: **13.11.2002**
(21) Anmeldenummer: 95109416.8
(22) Anmeldetag: 19.06.1995
(51) Int. Cl.: C07F 15/00

(54) **Neue Palladacyclen sowie ein Verfahren zu ihrer Herstellung**
Palladocycles and process for their preparation
Palladocycles et procédé de leur préparation

(30) Priorität: 22.06.1994 DE 4421753
(43) Veröffentlichungstag der Anmeldung: 27.12.1995
(73) Patentinhaber: Degussa AG, 40474 Düsseldorf (DE)
(72) Erfinder: Beller, Matthias, Dr., D-65510 Idstein (DE); Fischer, Hartmut, Dr., D-65719 Hofheim (DE); Herrmann, Wolfgang Anton, Prof. Dr., D-85354 Freising (DE); Brossmer, Christoph, Dr., D-60318 Frankfurt (DE)

(56) Entgegenhaltungen:
- JOURNAL OF THE CHEMICAL SOCIETY, DALTON TRANSACTION, 1973 Seiten 270 - 278 GILL, D.F. ET AL. 'TRANSITION METAL-CARBON BONDS. PART XXXIII. INTERNAL METALLATIONS OF SECONDARY AND TERTIARY CARBON ATOMS BY PLATINUM(II) AND PALLADIUM(II)'
- JOURNAL OF THE CHEMICAL SOCIETY, DALTON TRANSACTIONS, 1972 Seiten 860 - 865 CHENEY, A.J. ET AL. 'TRANSITION METAL-CARBON BONDS. PART XXXI. INTERNAL METALLATIONS OF PALLADIUM(II)-T-BUTYLDI-O-TOLYLPHOSPHINE AND -DI-T-BUTYL-O-TOLYLPHOSPHINE COMPLEXES'
- JOURNAL OF THE CHEMICAL SOCIETY, CHEMICAL COMMUNICATIONS, 1972 Seiten 65 - 66 GILL, D.F. ET AL. 'INTERNAL METALLATION OF TERTIARY AND SECONDARY CARBON ATOMS'
- CHEMICAL ABSTRACTS, vol. 101, no. 12, 17. September 1984, Columbus, Ohio, US; abstract no. 101670c, RHEINGOLD, A.L. ET AL. 'CRYSTAL AND MOLECULAR STRUCTURE OF BIS(.MU.-IODO)-BIS( O-(DI-O-TOLYLPHOSPHINO)BENZYL)DIPALLADIUM( II), A PRODUCT OF THE CYCLOPALLADATION FOR TRANS-((O-TOL)3P)2PDI2' Seite 680 ; & ORGANOMETALLICS, Bd.3, Nr.9, 1984 Seiten 1414 - 1417
- CHEMICAL ABSTRACTS, vol. 110, no. 21, 22. Mai 1989, Columbus, Ohio, US; abstract no. 193095f, ALYEA, E.C. ET AL. 'CRYSTAL AND MOLECULAR STRUCTURES OF BIS(.MU.-CHLORO)BIS(O-(DIMES ITYLPHOSPHINO)-3,5-DIMETHYLBENZYL)DIPALLAD IUM(II) ACETONE SOLVATE, ETC.' Seite 776 ; & ORGANOMETALLICS, Bd.8, Nr.5, 1989 Seiten 1188 - 1191
- SYNTHESIS, Nr.3, 1985 Seiten 233 - 252 RYABOV, A.D. 'CYCLOPALLADATED COMPLEXES IN ORGANIC SYNTHESIS'

## Beschreibung

Die Erfindung betrifft neue Palladacyclen sowie ein Verfahren zu ihrer Herstellung.

Palladacyclen spielen als Katalysatoren für eine Reihe von Verfahren eine wichtige Rolle. Als Beispiele für derartige Verfahren seien die Synthese von substituierten Styrolen, die Herstellung von Stilbenen und Zimtsäuren aus Arylhalogeniden genannt.

Die am gleichen Tag eingereichte Patentanmeldung EPO688757 beschreibt ein neues vorteilhaftes Verfahren unter Einsatz dieses Katalysatortyps.

In der Literatur sind unter anderem
trans-Di-,u-bromo-bis[o-(di-tolyiphosphino)benzylldipalladium (11) (R.F. Heck et al.-, J. Org. Chem. 49, (1984), 1640-1646)
trans-Di-µ-chloro-bis[o-(di-tolylphosphino)benzyl]dipalladium(II)
trans-Di-µ-iodo-bis[o-(di-tolylphosphino)benzyl]dipalladium(II) trans-Di-µ-bromo-bis[o-(di-mesitylphosphino)-3,5-dimethylbenzyl]dipalladium(II)
(E.C. Alyea, J. Malito, J. Organomet. Chem. 340 (1988), 119-126)
trans-Di-µ-chloro-bis[o-(di-mesitylphosphino)-3,5-dimethylbenzyl]dipalladium(II)
trans-Di-µ-iodo-bis[o-(di-mesitylphosphino)-3,5-dimethylbenzyl]dipalladium(II)
trans-Di-µ-acetato-bis[o-(t-butyl-o-tolylphosphino)benzyl]dipalladium(II)
(G.Y. Gainsford, R. Mason, J. Organomet. Chem. 80 (1974) 395)
trans-Di-µ-acetato-bis[o-(di-t-butylphosphino)benzyl]dipalladium(II) (A.Y.
Cheney, B.L. Shavv J. Chem. Soc. Dalton Trans. (1972) 860)
beschrieben.

Darüber hinaus sind in Gill, D.F. et al., Journal of the Chemical Society, Dalton Transaction, 1973, Seiten 270-278; Cheney, A.J. et al., Journal of the Chemical Society, Dalton Transaction, 1972, Seiten 860-865; Gilt, D.F. et al., Journal of the Chemical Society, Chemical Communications, 1972, Seiten 65-66; Rheingold, A.L. et al., Organometallics, Bd. 3, Nr. 9, 1984, Seiten 1414-1417 und Alyea, E.C. et al., Organometallics, Bd. 8, Nr. 5, 1989, Seiten 1188-1191 eine Vielzahl weiterer derartiger Palladacyclen offenbart.

Im Hinblick auf die Vielfalt der Einsatzmöglichkeiten von Palladacyclen besteht ein Bedarf an neuen Palladacyclen um einerseits das Spektrum ihrer Anwendungsmöglichkeiten zu ergänzen und zu erweitern und andererseits bestimmte Reaktionen besonders günstig durchführen zu können.

Die Aufgabe wird gelöst durch Palladacyclen der allgemeinen Formel (I) 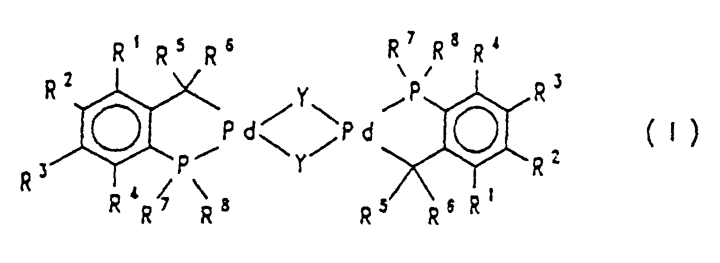 worin bedeuten:
R¹, R², R³, R⁴, R⁵, R⁶ Wasserstoff oder Methyl,
R⁷, R⁸ o-Tolyl, Mesityl oder Cyclohexyl und
Y eine anionische acetato- oder chloro-Gruppe darstellt, wobei Formel (1) für eine Verbindung aus der Gruppe
trans-Di-*µ*-acetato-bis[o-(di-o-tolylphsophino)benzyl]dipalladium(II)-,
trans-Di-µ-chloro-bis[o-(di-o-tolylphosphino)benzyl]dipalladium(II)-,
trans-Di-µ-acetato-bis[o-(dimesitylphosphino)-3,5-dimethylbenzyl]dipalladium(II)-,
Di-µ-acetato-bis[o-(cyclohexyl-o-tolylphosphino)benzyl]dipalladium(II)-steht.

Die erfindungsgemäßen Palladacyclen stellen eine neue Klasse von Katalysatoren dar. Die Katalyseergebnisse bei der Olefinierung von Arylhalogeniden sind im Vergleich zum Stand der Technik außergewöhnlich, so daß ein großes technisches Interesse an den erfindungsgemäßen Katalysatoren besteht.

Die Erfindung betrifft ferner ein Verfahren zur Herstellung von Verbindungen nach Anspruch 1, dadurch gekennzeichnet, daß man ein Phosphan der allgemeinen Formel (II) 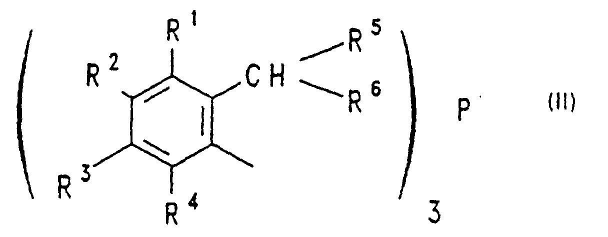 worin R¹ bis R⁶ die genannte Bedeutung besitzen, mit einem Palladiumsalz der allgemeinen Formel (III), einem Palladiumkomplex der allgemeinen Formel (IV) oder einem Alkalipalladat der allgemeinen Formel (V)

Pd Y₂ (III) Pd Y₂L₂ (IV) M₂[PdY₄] (V)

wobei Y die definierte Bedeutung besitzt, M für Natrium, Kalium oder Lithium und L für 1,5 Cyclooctadien, Acetonitril oder Benzonitril steht, in Gegenwart eines organischen Lösungsmittels umsetzt.

In vielen Fällen hat es sich bewährt die Reaktion bei einer Temperatur von 0 bis 160°C, insbesondere 10 bis 150°C, bevorzugt 15 bis 140°C durchzuführen. Es hat sich als günstig erwiesen das Phosphan der Formel (II) und die Palladiumverbindung der Formel (III), (IV) oder (V) in einem molaren Verhältnis von 0.1 bis 20, insbesondere 0.15 bis 15, bevorzugt 0.2 bis 10 einzusetzen.

Als Lösungsmittel eignen sich beispielsweise Kohlenwasserstoffe oder insbesondere aromatische Kohlenwasserstoffe. Sehr geeignet sind Toluol oder Xylole.

Für die Herstellung von schwerer löslichen Palladacyclen ist es auch möglich, einen leichter löslichen Palladacyclus mit dem entsprechenden Anion einer organischen oder anorganischen Säure umzusetzen.

Die Beispiele sollen die Erfindung erläutern, ohne sie darauf zu beschränken.

### Beispiel 1:

### trans-Di-(µ-acetato-bis[o-(di-o-tolylphosphino)benzyl]dipalladium (II) (1)

4,5 g (20 mmol) Pd(OAc)₂ werden in 500 ml Toluol mit rotbrauner Farbe gelöst. Die Lösung wird mit 8,0 g (26,3 mmol) Tri-(o-tolyl)phosphan versetzt. Die sich rasch nach hellorange aufklarende Lösung wird 3 Minuten lang auf knapp 50°C erhitzt und dann auf Raumtemperatur abgekühlt. Das Lösungsmittel wird im Vakuum bis auf 1/4 des Volumens entfernt. Nach Zugabe von 500 ml Hexan wird der ausgefallene Niederschlag abfiltriert. Man erhält 8,8 g (93 % d. Th.) bezogen auf Pd(OAc)₂) (1) als gelben Feststoff (Schmp. > 200°C). Durch Umkristallisation aus Toluol/Hexan oder Methylenchlorid/Hexan und Filtration der Lösungen über Celite® kann (1) in Form gelber Kristallnadeln analysenrein gewonnen werden.
Elementaranalyse:
Gef.: C, 58,89 %; H, 5,06 %; P, 6,92 %; O, 6,47 %; Pd, 21,84 %;
C₄₆H₄₆O₄P₂Pd₂ (937,62)
ber.: C, 58,93 %; H, 4,94 %; P, 6,61 %; O, 6,83 %; Pd, 22,70 %;
IR (cm⁻¹, KBr): 3052m, 3007m, 2954w, 2925m *v*(CH); 1578vs *v*(µ₂-C=O), 1468s; 1630 *v*(C=C); 1578, 1416 *v*/µ₂-CO); 1341;
¹H-NMR (400 MHz, -70°C, CD₂Cl₂): δ =7.31 (4H, m, H_{Tolyl}); 7.21 (2H, m, H_{Tolyl}); 7.12 (6H, m, H_{Tolyl}); 7.06 (2H, t, H_{Benzyl}, ³J(HH) = 7.3 Hz); 6.92 (4H, m, H_{Tolyl}); 6.70 (2H, t, H_{Benzyl}, ³J(HH) = 7.3 Hz); 6.56 (2H, t, H_{Benzyl}, ³J(HH) = 9 Hz); 6.35 (2H, dd, H_{Benzyl}, ³J(HH) = 7.9 Hz, ⁴J(PH) = 12.2 Hz); 3.00 (6H, s, CH₃); 2.81 (2H, dd, CHₐH_{b}, ²J(HₐH_{b}) = 14.0 Hz, ³J(PH) = 4.3 Hz); 2.40 (2H, dd, CHₐH_{b}, ²J(HₐH_{b}) = 14.0 Hz, ³J(PH) = 1.8 Hz); 2.10 (6H, s, CH₃); 1.91 (s, 6H, CH₃);
¹³C{¹H}-NMR (100.5 MHz, -70°C, CD₂Cl₂): δ = 178.5 (s, CH₃CO₂); 157.1 (d, C_{Ar}, J(PC) = 31.3 Hz); 141.1 (d, C_{Ar}, J(PC) = 16.0 Hz); 141,0 (d, C_{Ar}, J(PC) = 21.0 Hz); 133.0 (s, C_{Ar}); 132.5 (d, C_{Ar}, J(PC) = 4.6 Hz); 132.4 (d, C_{Ar}, J(PC) = 6.1 Hz); 131.7 (d, C_{Ar}, J(PC) = 8.8 Hz); 131.4 (d, C_{Ar}; J(PC) = 13.7); 131.3 (d, C_{Ar}, J(PC) = 9.9 Hz); 130.4 (d, C_{Ar}, J(PC) = 16.0 Hz); 129.9 (s, C_{Ar}); 129.1 (d, C_{Ar}, J(PC) = 46.2 Hz); 128.7 (s, C_{Ar}); 128.1 (d, C_{Ar}, J(PC) = 33.2 Hz); 127.6 (d, C_{Ar}, J(PC) = 23.7 HZ); 125.6 (d, C_{Ar}, J(PC) = 7.3 Hz); 125.2 (d, C_{Ar}, J(PC) = 7.3 Hz); 124.9 (d. C_{Ar}, J(PC) = 11.4 Hz); 30.8 (s, CH₂); 24.7 (d, CH₃CO₂, 4J(PC) = 3.1 Hz);23.0 (d, CH₃, 3J(PC) = 13.7 Hz); 22.2 (d, CH₃, 3J(PC) = 6.9 Hz);
³¹P{¹H}-NMR (161.9 MHz, -70°C, CD₂Cl₂): δ = 34.2 (s);
Cl-MS (150 eV): m/e = 939 [M⁺ +H], 880 [M⁺-OAc], 819 [M⁺-2OAc], 714 [Pd{o-CH₂C₆H₄P(o-Tol)₂}₂⁺].

### Beispiel 2

### trans-Di-µ-chloro-bis[o-(di-tolylphosphino)benzyl]dipalladium(II) (2).

250 mg (0,27 mmol) Pd₂(OAc)₂{o-CH₂C₆H₄P(o-Tol)₂}₂ werden in 20 ml Methylenchlorid gelöst, mit 1,00 g (3,38 mmol) [NBu₄]Cl versetzt und 1 Stunde bei Raumtemperatur gerührt. Das Lösungsmittel wird im Vakuum entfernt und der Rückstand in 30 ml Methanol aufgenommen. Der feine, gelbe Niederschlag wird abfiltriert, dreimal mit 20 ml Methanol und zweimal mit 20 ml Pentan gewaschen und im Vakuum getrocknet. Man erhält 237 mg (100 % d. Th.) 2 als gelben Feststoff, der in CH₂Cl₂ und DMF schwerlöslich ist.
Elementaranalyse: Gef.: C, 56.29; H, 4.57; p, 7.04; Cl, 8.14; Pd, 23.49 %. C₄₂H₄₀Cl₂P2Pd₂ (890.43) ber.: C, 56.65; H, 4.53; P, 6.96; Cl, 7.96; Pd, 23.90 %;
³¹P-{¹H}-NMR (CD₂Cl₂ mit [NBu₄]Cl Zusatz, 20°C, 161,85 MHz): δ = 39.3 (s); Cl-MS (150 eV): m/e = 891 [M⁺ +H], 481 [Pd{o-CH₂C₆H₄P(o-Tol)₂}Cl₂⁺], 444 [Pd{o-CH₂C₆H₄P(o-Tol)₂}Cl⁺].

### Beispiel 3

### trans-Di-µ-acetato-bis[o-(di-mesitylphosphino)-3,5-dimethylbenzyl]dipalladium (II) (3)

1,30 g (5,80 mmol) Palladium(II)acetat werden in 200 ml Toluol mit rotbrauner Farbe gelöst und mit 2,30 g (5,91 mmol) Tri-mesitylphosphan P(Mes)₃ versetzt. Es wird 12 Stunden bei Raumtemperatur gerührt, wobei sich die Farbe der Lösung allmählich nach dunkelgelb verfärbt. Die Toluollösung wird anschließend über eine mit Celite® gefüllte Fritte filtriert oder durch ein Whatman-Filter® kanüliert, um Spuren elementaren Palladiums abzutrennen. Nach vollständigem Entfernen des Lösungsmittels im Vakuum wird der Rückstand in 10 bis 20 ml Diethylether aufgenommen und unter geringer Kühlung (Eisbad) so lange gerührt (1 bis 12 Stunden), bis ein voluminöser, gelber Niederschlag ausfällt. Der Niederschlag wird abfiltriert, mit wenig (!) kaltem Diethylether und Pentan (je 5 ml) gewaschen und im Vakuum getrocknet. Man erhält 2,60 g (81 % d. Th.) 3 als gelben Feststoff, der sowohl in Et₂O als auch in Hexan löslich ist. Um ein analysenreines Produkt zu erhalten, müssen Spuren an freiem P(Mes)₃ durch Chromatographie entfernt werden (Kieselgel/50 % CH₂Cl₂/n-Hexan). Eine Umkristallistion des Komplexes führt zu Ausbeuteverlusten, da (3) und P(Mes)₃ ähnliche Lösungseigenschaften besitzen.
³¹P-{¹H}-NMR (CD₂Cl₂, -70°C, 161,85 MHz): δ = 25.6 (s);
Cl-MS (150 eV): m/e = 1106 [M⁺], 1047 [M⁺-OAc], 988 [M⁺-2OAc], 881 [Pd{o-CH₂C₆H₂(CH₃)₂P(Mes)₂}⁺].

### Beispiel 4

### Di-µ-acetato-bis[o-(cyclohexy-o-tolylphosphino)benzyl]dipalladium (II)

1,75 g (7,80 mmol) Pd(OAc)₂ werden in 200 ml Toluol gelöst, mit 2,45 (8,27) mmol) Di(o-tolyl)-cyclohexylphosphan versetzt und 6 Stunden bei Raumtemperatur gerührt. Das Lösungsmittel wird im Vakuum entfernt und der Rückstand in 30 ml Diethylether suspendiert. Der sich abscheidende, weißliche Niederschlag wird abfiltriert, getrocknet und in 20 ml Toluol aufgenommen. Die dabei erhaltene Lösung bzw. Suspension wird über eine mit Celite® gefüllte Fritte filtriert, um elementares Palladium und schwerlösliche Nebenprodukte zu entfernen. Das orange bis hellgelb gefärbte Filtrat wird im Vakuum bis zur Trockene eingeengt und der Rückstand aus Methylenchlorid/n-Hexan oder Toluol/n-Hexan bei -30°C umkristallisiert. Man erhält 1,5 g (42 % d. Th.) 4 in Form blaßgelber bis farbloser Kristalle.
Elementaranalyse: Gef.: C, 57.15 %; H, 5.87 %; P, 6.94 %; O, 6.84 %; Pd, 23.02 %; C₄₄H₅₄O₄P₂Pd₂ (921.66) ber.: C, 57.34 %; H, 5.91 %; P 6.72 %; O, 6.94 %; Pd, 23.09 %;
¹H-NMR (CD₂Cl₂, 20°C, 400 MHz): d = 7.4-6.8 (16H, m, HAryl); 2.8-2.2 (4H, m, CH₂); 2.41 (3H, s, CH₃); 2.15 (3H, s, CH₃); 1.88 (6H, s, CH₃); 2.0-0.7 (22H, b, HCy);
³¹P-{¹H}-NMR (CD₂Cl₂, 20°C, 161,85 MHz): δ = 57.8 (s, trans-Isomer), 56.0-55.0 (b, cis-lsomer); (CD₂Cl₂, -90°C, 161.85 MHz): δ = 62 (m und b, trans-Isomer), 54 (m und b, cis-Isomer).
Cl-MS (150 eV): m/e = 923 [M⁺ +H], 697 [Pd{o-CH₂C₆H₄P(o-Tol)(Cy)}₂⁺].

## Patentansprüche

1. Palladacyclen der allgemeinen Formel (I) 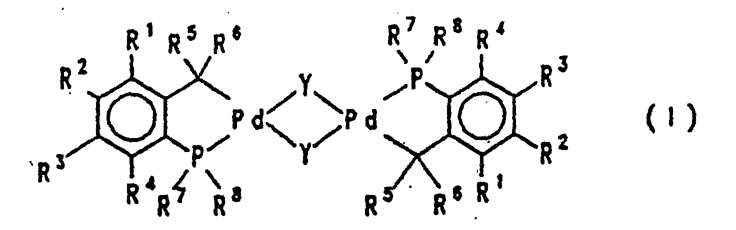 worin bedeutet:
R¹, R², R³, R⁴, R⁵, R⁶ Wasserstoff oder Methyl
R⁷, R⁸ o-Tolyl, Mesityl oder Cyclohexyl und
Y eine anionische acetato- oder chloro-Gruppe darstellt **dadurch gekennzeichnet, daß Formel (I) für eine**
trans-Di-µ-acetato-bis[o-(di-o-tolylphsophino)benzyl]dipalladium(ll)-,
trans-Di-µ-chloro-bis[o-(di-o-tolylphosphino)benzyl]dipalladium(II)-,
trans-Di-µ-acetato-bis[o-(dimesitylphosphino)-3,5-dimethylbenzyl]dipalladium(II)-,
Di-µ-acetato-bis[o-(cyclohexyl-o-tolylphosphino)benzyl]dipalladium(II)-Verbindung steht.

2. Verfahren zur Herstellung von Verbindungen nach Anspruch 1, **dadurch gekennzeichnet, daß** man ein Phosphan der allgemeinen Formel (II) 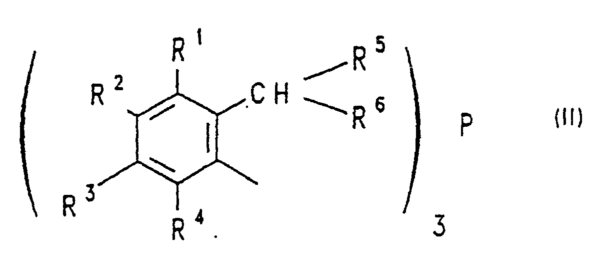 worin R¹ bis R⁶ die genannte Bedeutung besitzen, mit einem Palladiumsalz der allgemeinen Formel (III) einem Palladiumkomplex der allgemeinen Formel (IV) oder einem Alkalipalladat der allgemeinen Formel (V)
PdY₂ (III) PdY₂L₂ (IV) M₂[PdY₄] (V)
wobei Y die definierte Bedeutung besitzt, M für Natrium, Kalium oder Lithium und L für 1,5 Cyclooctadien, Acetonitril oder Benzonitril steht, in Gegenwart eines Lösungsmittels umsetzt.

3. Verfahren nach Anspruch 2, **dadurch gekennzeichnet, daß** die Reaktion bei 0 bis 160°C durchgeführt wird.

4. Verfahren nach mindestens einem der Ansprüche 2 oder 3, **dadurch gekennzeichnet, daß** das Phosphan der Formel (II) zu Palladiumverbindung der Formel (III), (IV) oder (V) im molaren Verhältnis von 0,1 bis 20 eingesetzt wird.

5. Verfahren nach mindestens einem der Ansprüche 2 bis 4, **dadurch gekennzeichnet, daß** als Lösungsmittel Kohlenwasserstoffe eingesetzt werden.

## Claims

1. Palladocycles of the general formula (I) 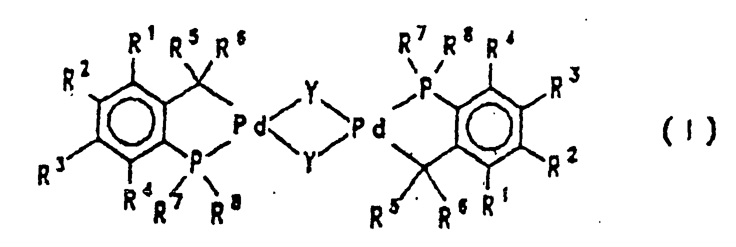 wherein:
R¹, R², R³, R⁴, R⁵, R⁶ represent hydrogen or methyl, R⁷, R⁸ represent o-tolyl, mesityl or cyclohexyl, and
Y represents an anionic acetato or chloro group,
**characterised in that** formula (I) represents
a trans-di-µ-acetato-bis[o-(di-o-tolylphosphino)-benzyl]dipalladium(II) compound,
a trans-di-µ-chloro-bis[o-(di-o-tolylphosphino)-benzyl]dipalladium(II) compound,
a trans-di-µ-acetato-bis[*o*-(dimesitylphosphino)-3,5-dimethylbenzyl]dipalladium(II) compound,
a di-µ-acetato-bis[o-(cyclohexyl-o-tolylphosphino)-benzyl]dipalladium(II) compound.

2. Process for the preparation of compounds according to claim 1, **characterised in that** a phosphane of the general formula (II) 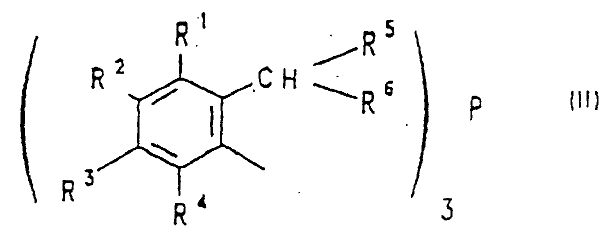 wherein R¹ to R⁶ are as defined above, is reacted in the presence of a solvent with a palladium salt of the general formula (III), with a palladium complex of the general formula (IV) or with an alkali palladate of the general formula (V)
PdY₂ (III) PdY₂L₂ (IV) M₂[PdY₄] (V)
wherein Y is as defined above, M represents sodium, potassium or lithium, and L represents 1,5-cyclooctadiene, acetonitrile or benzonitrile.

3. Process according to claim 2, **characterised in that** the reaction is carried out at from 0 to 160°C.

4. Process according to at least one of claims 2 or 3, **characterised in that** the phosphane of formula (II) is used in a molar ratio of from 0.1 to 20 relative to the palladium compound of formula (III), (IV) or (V).

5. Process according to at least one of claims 2 to 4, **characterised in that** hydrocarbons are used as the solvent.

## Revendications

1. Palladocvcles de formule générale (I) 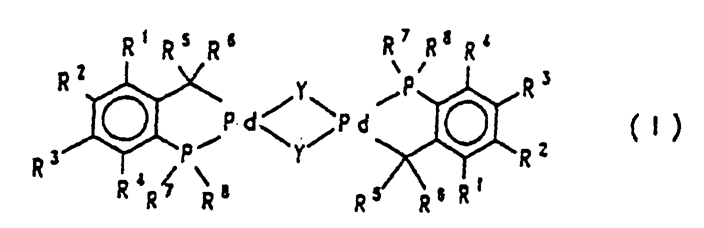 dans laquelle :
R¹, R², R³, R⁴, R⁵, R⁶ représentent un atome d'hydrogène ou le groupe méthyle,
R⁷, R⁸ représentent le groupe o-tolyle, mésityle ou cyclohexyle et
Y représente un groupe anionique acétato ou chloro,
**caractérisés en ce que**
la formule (1) représente un composé
*trans*-di-µ-acétato-bis[o-(di-o-tolylphosphino)benzyl)dipalladium-(II),
*trans-*di-µ-chloro-bis[o-(di-o-tolylphosphino)benzyl]dipalladium-(II),
*trans*-di-µ-acétato-bis[o-(dimésitylphosphino)-3,5-diméthylbenzyl]dipalladium-(II),
di-µ-acétato-bis[o-(cyclohexyl-o-tolylphosphino)benzyl]dipalladium-(II).

2. Procédé pour la préparation de composés selon la revendication 1,
**caractérisé en ce qu'**
on fait réagir un phosphane de formule générale (II) 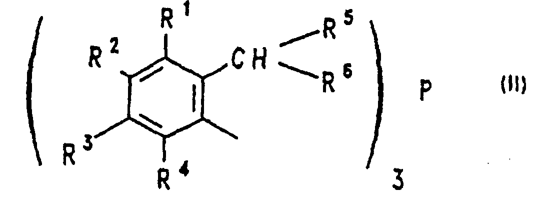 dans laquelle R¹ à R⁶ ont les significations indiquées,
avec un sel de palladium de formule générale (III), un complexe de palladium de formule générale (IV) ou un palladate alcalin de formule générale (V)
Pd Y₂ (III) Pd Y₂L₂ (IV) M₂[PdY₄] (V)
Y ayant la signification définie, M représentant le sodium, le potassium ou le lithium, et L représentant le 1,5-cyclooctadiène, l'acétonitrile ou le benzonitrile,
en présence d'un solvant.

3. Procédé selon la revendication 2,
**caractérisé en ce que**
la réaction est effectuée à une température de 0 à 160°C.

4. Procédé selon au moins l'une des revendications 2 et 3,
**caractérisé en ce qu'**
on utilise le phosphane de formule (II) en un rapport molaire de 0,1 à 20 par rapport au composé palladié de formule (III), (IV) ou (V).

5. Procédé selon au moins l'une des revendications 2 à 4,
**caractérisé en ce qu'**
on utilise comme solvant des hydrocarbures.
